# EUROPEAN PATENT SPECIFICATION

(11) **EP 0 720 688 B1**
(45) Date of publication and mention of the grant of the patent: **03.01.2001**
(21) Application number: 93923191.6
(22) Date of filing: 01.10.1993
(51) Int. Cl.: F01M 11/04

(54) **WASTE FLUID RECOVERY AND NEW FLUID DELIVERY SYSTEM**
ALTFLUIDUMRÜCK GEWINNUNG -UND NEUFLUIDIUMZUFUHRANLAGE
SYSTEME DE RECUPERATION DE FLUIDES USES ET D'ALIMENTATION EN FLUIDES NEUFS

(43) Date of publication of application: 10.07.1996
(73) Proprietor: C.H.& I. Technologies, Inc., Santa Paula, CA 93060 (US)
(72) Inventor: CLARK, James, E., II, Ojai, CA 93023 (US)
(74) Representative: Casey, Lindsay Joseph
(86) International application number: US9309347
(87) International publication number: WO9509990

(56) References cited:
- DE-U- 9 207 315
- JP-A- 4 368 258
- US-A- 4 095 673
- US-A- 4 193 487
- US-A- 5 062 500
- US-A- 5 184 939

## Description

### Technical Field

This invention relates to the field of fluid recovery and delivery systems, and more particularly to a system for the removal of waste fluid materials, including, but not limited to various types of motor oils, hydraulic oils, transmission oils, greases and assorted coolants, from vehicles and machinery at their site, and delivery of new fluids to the vehicles and machinery in an improved manner wherein neither the collection of such waste materials nor the delivery of new materials requires the cleaning of the use and delivery devices after each use, and is accomplished in a safe and effective manner.

### Background Art

Lubricants and cooling fluids for typical machinery and vehicles and their recoverable wastes comprise, in the main, the following materials or "streams":

| Fluids (New) | Waste Fluids |
|---|---|
| 1. motor oil | 1. waste motor oil |
| 2. hydraulic oil | 2. waste hydraulic oil |
| 3. transmission oil | 3. waste transmission oil |
| 4. coolant | 4. waste coolant |
| 5. greases and other industrial fluids | 5. waste grease and industrial fluids |

Under present practices, after the fluids are utilized beyond their useful life, they are collected from the vehicle or machine in an unsegregated and unsealed manner into bulk drums or tanks. Not only are various oil-based lubricants and other fluids mixed together this way, i.e. motor oil and transmission oil, but different kinds of the same category of fluids are mixed. For example, different viscosity and additive package motor oils by different manufacturers would be expected to end up in a common bulk waste fluid tank, even if other fluids (i.e. coolant and transmission fluids) were managed to be kept out, resulting in a jumble of crossed-mixed fluids of different viscosities and additives. The fact that the various fluids are collected in an unsealed manner, virtually insures that further contamination of the waste fluids with dirt, dust, water, etc. will occur, as well as increasing the possibility of fire and spillage of the waste fluids.

The concoction of different waste fluids is then pumped out of the drums or bulk tanks, or directly taken in its drums by a waste fluid hauler. In the case of at least partially recyclable fluids, such as motor oil, these waste fluids are then delivered to a waste fluid recycler, where the waste fluid can be "cleaned up," and recycled. In the case of various oil-based fluids, such as motor oil, the recycler filters them, boils off the volatiles, and sells the resulting product to various end users, e.g. to shippers for use as marine bunker fuel. In contrast with the relative high price and high quality of the new lubricant oil stocks, the value of such "refined" and "recycled" oil is low, perhaps $.20/gallon. However, lubricating oil formulators will not buy the "recycled" oil because it lacks consistency in its physical and chemical properties, which is in part due to the different oil additive packages included in the oil of different manufacturers, and the high probability that the waste oil was contaminated with other oil based fluids, such as hydraulic fluid and transmission fluid, during its collection in unsegregated containers.

Not only are there purity problems with the resulting waste fluids collected by prior art methods, but also problems associated with the cleaning and safety of the containers and equipment used to collect waste fluids and deliver new fluids. For example, after the new lubricant containers are delivered to the site and emptied of their contents, they are either discarded, or steam and acid cleaned by a licensed oil container cleaner, and then reused for new oil or delivered to a service station or other site for use in collecting waste fluids or other waste products. There is substantial expense and deleterious environmental impact associated with the cleaning of new and waste fluid containers, and with storing and delivering these containers which are normally neither pressure vessels, nor capable of withstanding severe impact.

There have been numerous attempts to provide simple yet efficient waste fluid recovery and delivery systems. U.S. Patent No. 4,109,831 to *Culpepper, et al.;* 2,477,450 to *Gray;* 2,552,749 to *Tabet;* 2,536,492 to *Dunn et al.;* 2,612,289 to *Koester;* 3,430,730 to *Kitajima;* 4,378,026 to *Bauer;* and 4,095,672 to *Senese* all have attempted to solve the above outline problems, and have fallen short.

There accordingly remains a need for an efficient, safe, and environmentally sound device and method to collect waste fluids from vehicles and machinery and to deliver new fluids to vehicles and machinery.

### Disclosure Of The Invention

The waste fluid recovery and new fluid delivery system herein set forth solves the above noted shortcomings of prior art systems by providing an environmentally safe and clean low cost two section portable/stationary system. The system allows waste fluid recovery and new fluid delivery directly at the site of the vehicle or machinery into the portable portion, with emptying of the waste fluid and replenishing of the new fluid of the portable portion occurring at the stationary portion. This not only eliminates substantially, or entirely, the cleaning of new fluid drums or other new fluid containers, but results in the collection of more recyclable waste fluid streams which are much more consistent in physical/chemical values, and much more valuable to a reformulator. Another advantage afforded by this two section portable/stationary system is that it allows the new and waste fluids to be collected and delivered in a quick, clean, and safe manner.

The invention comprises a system of waste fluid collection and new fluid delivery wherein a service station, a maintenance department of a trucking or delivery firm, or other entity responsible for waste fluid collection, e.g. an industrial site or farm, is provided with a series of individually coded stationary and bulk waste fluid pressure containers (primary waste containers) and a series of individually coded stationary and bulk new fluid pressure containers (primary new containers). Each of the primary waste and new fluid containers have visual coded information or markings thereon identifying the type of waste/new fluid stream which it is to contain. In order to save valuable work or storage space, for example in a garage or service area for vehicles and machinery, the stationary part of the system, that is, the primary waste and new fluid containers, may be located wherever desired.

A series of individually coded, portable pressure waste fluid containers (secondary waste fluid containers) and a series of individually coded, portable pressure new fluid containers (secondary new fluid containers) are also provided in conjunction with the primary waste and new fluid containers. As with the stationary primary containers, individual secondary containers are provided for the distinct waste and new fluids, and each secondary containers will be coded in the same manner as the stationary containers are coded.

The portable secondary waste and new fluid containers are sized substantially smaller than the primary containers so that they can be readily transported directly to the site of the vehicle or machinery to be serviced. The portable secondary waste fluid and new fluid pressure containers are conveniently set on a portable wheeled cart, or can be otherwise carried, so that they can be easily moved to the site of the vehicles or machinery, be it a parking lot, a manufacturing facility, a shop, or elsewhere. It is at the site of the vehicle or machinery that the waste fluid(s) will be conducted into the secondary waste fluid container(s). The Applicant utilizes dead vacuum pressure in the secondary waste fluid containers to draw the waste fluids from the vehicle or machinery via an evacuation hose into the waste fluid containers. After the waste fluids are removed, the new fluids are delivered to the vehicle or machinery. The motive force to convey the new fluids from the secondary new fluid container to the vehicle or machinery is provided by pressurized inert gas contained in the secondary new fluid containers.

The purpose of providing coded waste and new fluid primary and secondary containers is to ensure that each particular waste and new fluid streams are stored in their own dedicated waste and new fluid containers. Thus, for example, a waste motor oil, such as Exxon® 30 wt. will be collected in a waste oil pressure cylinder having a blue line encircling the drum near the bottom thereof, whereas waste Exxon® 10-40 wt. motor oil might be drained into a waste oil pressure cylinder having an orange line. Waste automatic transmission fluid (ATF) will be drained into a waste transmission fluid cylinder having a red line encircling the container, near the bottom thereof. Likewise, new fluids will be available at the facilities in sealed containers, which are also identified with visual indicia as to the type of new fluid contained therein, such as placement of the same colored lines, but near the top of the containers.

After the waste fluid is suctioned into the secondary waste fluid container at the site of the vehicle or machinery, and the new fluid is conveyed from the secondary new fluid container to the vehicle or machinery, the portable secondary system is wheeled back to the primary system where the secondary system is readied for reuse as follows. The primary waste fluid container will be connected to the secondary waste fluid container with a vacuum line, and the waste fluid will be removed from the secondary waste fluid container through the vacuum line and evacuated until all of the waste fluid in the secondary waste container is removed and the vacuum pressures are equalized in the primary and secondary containers, thereby returning the secondary waste fluid tank to a vacuum state.

Simultaneously, the primary and secondary new fluid containers are connected via a new fluid delivery line, and the new fluid is automatically pressure fed from the primary to the secondary new fluid container, until the nitrogen gas pressure in the primary and secondary are equalized.

The self-equalizing feature of the primary and secondary waste and new fluid systems thus provide an automatic and self-regulating system, wherein the user basically need only connect the two portions of the system, and wait a short while until the primary part of the system is automatically readied for reuse.

After the primary waste fluid containers are substantially full and the new fluid containers are substantially empty, a waste fluid hauler will then pump out each of the waste fluid containers into discrete compartments or containers on the truck, and return them to the waste fluid recycler. The recycler, in turn, pools the particular waste fluids together with other like waste fluids and thus will have a far more consistent feedstock to recycle. The recycler will thus be able to achieve a more consistent and higher valued recycled product than if the recycler were given a mixed stream of different waste fluids, such as motor, hydraulic transmission fluids and/or coolants. As an example of the possibilities, automatic transmission fluid sent to a waste oil recycler from a "dedicated" waste fluid container of the waste oil hauler, and used for reformulation will have a value of perhaps five times the usual value attributable to the mixed fluids sent to the reformulator, e.g. $1.15/gallon ATF vs. $0.20/gallon mixed fluids.

The different new and waste fluid streams may comprise motor oil, hydraulic fluid, transmission fluid, greases, other industrial lubricants, coolants, and other fluids used in vehicles and machinery. The different sites include vehicle service stations, farms, and industrial and commercial sites.

The invention also comprise a method of recovery and reuse of different waste fluid streams used by vehicles and machinery, involving the following main steps:
(1) at a number of different sites, discharging each of said different waste fluid streams into separate containers, each of which is specifically coded to identify and contain one particular waste fluid stream and no other, whereby each different waste fluid stream is discharged into a differently coded separate container;
(2) collecting and pooling each particular waste fluid stream, from each of said different sites, into a collective, particular waste fluid stream distinct and separate from any other different, particular, waste fluid stream; and
(3) reprocessing said pooled, particular waste fluid streams to produce fluid products suitable for reuse in industrial and commercial applications.

Further, the method of this invention includes the steps of delivering to vehicles and machinery, a series of new fluid streams, from a series of specifically coded new fluid containers, each containing a different fluid stream, and replenishing said series of new fluid containers, as they are depleted, from delivery vehicles carrying each of the new fluid containers, and, in this manner, avoiding the necessity of discarding, or steam/acid cleaning of the emptied new fluid containers.

### Brief Description Of Drawings

FIGURE 1 shows, in schematic form, a vehicle connected to a first embodiment of the portable secondary portion of the waste fluid recovery and new fluid delivery system of the invention to drain waste motor oil from and deliver new motor oil to the vehicle.

FIGURE 2 shows, in schematic form, a first embodiment of the stationary primary and portable secondary portions of the system hooked up to empty the waste fluid from the secondary waste fluid container and to fill the secondary new fluid container with new fluid.

FIGURE 3 shows a side elevational view of, a second embodiment of the invention for single use, do-it-yourself oil changes for vehicles.

FIGURE 4 is a top view of the four-way valve for the second embodiment of the invention, in its neutral position, with both the waste fluid and new fluid valves being shut off.

FIGURE 5 is a top view of the four-way valve unit of FIG. 4, in its position to vacuum up waste oil into the waste oil cylinder.

FIGURE 6 is a top view of the four-way valve unit of FIG. 4, in its position to deliver new oil from the new oil cylinder.

FIGURE 7 is a top view of the four-way valve unit of FIG. 4, in its position after the waste oil has been vacuumed up and the new oil delivered.

FIGURE 8 shows, in schematic form, an optional floating check valve on a secondary new fluid container of the invention of FIGS. 1 and 2, in its open position, showing oil exiting its fluid nozzle.

FIGURE 9 shows, in schematic form, the floating check valve of FIG. 8, in its closed position when the new fluid has been depleted, to prevent loss of the propellant inert gas.

FIGURE 10 shows, in schematic form, the floating check valve of FIG. 8, in its open position to allow the container to be recharged with new fluid, yet while preventing the loss of its propellant inert gas.

FIGURE 11 shows, in schematic form, a view of an optional floating check valve for placing a vacuum on a primary waste fluid container without withdrawing waste fluid into the vacuum generating source; and

FIGURE 12 shows, in schematic form, a view of the floating check valve of FIG. 11, closed due to over-filling with waste fluid.

### Best Mode For Carrying Out The Invention

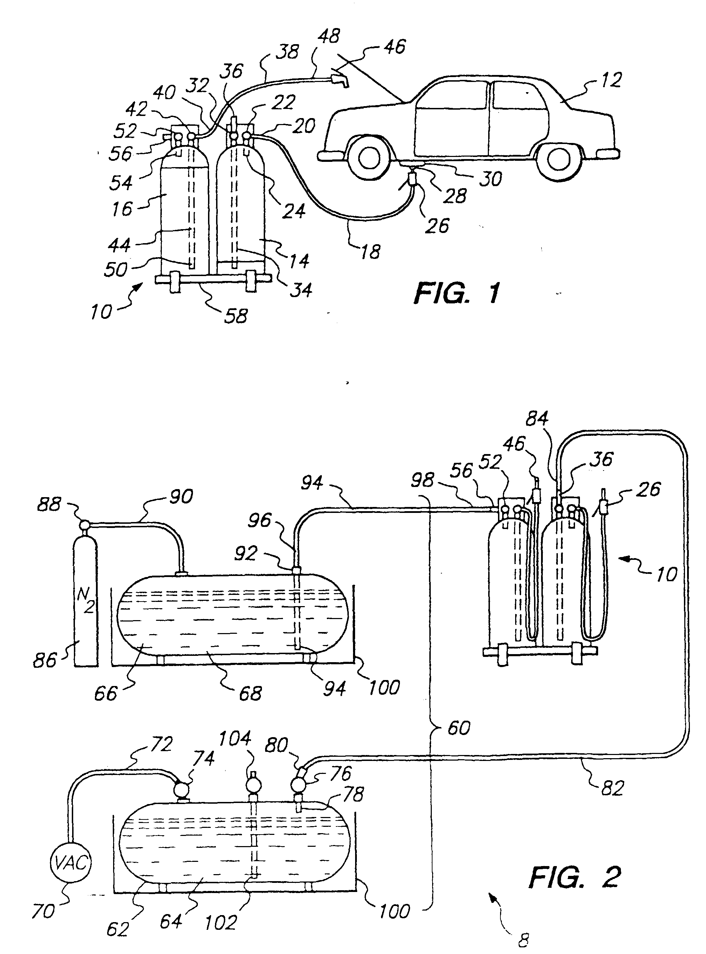

Referring generally to Figure 1, a first embodiment of the portable secondary portion 10 of the system 8 is shown at the site of a vehicle 12, which is shown undergoing a change of motor oil at e.g. a service station site. The portable secondary portion of the system 10 comprises a secondary waste fluid container 14 and a secondary new fluid container 16. The secondary fluid containers 14 and 16 are preferably U.S. Department of Transportation (D.O.T.) approved pressure vessels, conveniently in the size range of 20 to 30 gallons. A waste fluid suction hose 18 is connected at one end 20 to the waste fluid container 14, through a valve 22. The valve 22 has a short stub pipe 24 which extends a short way into the waste fluid container 14. The other end of the waste fluid suction hose 18 has a nozzle attachment 26 fixed thereto, which is adapted to fluid tightly engage with a quick release fitting 28 permanently attached to the oil pan 30 of the vehicle 10 being serviced. A second valve 32 is also provided for emptying the waste fluid from the waste fluid container 14. It has a feed pipe 34 which extends down to near the bottom of the waste fluid container 14 to allow waste fluid to be suctioned therefrom, out through the second valve 32, and out the outlet 36. The secondary waste fluid container 14 is delivered to the site of the vehicle 12 in a substantially evacuated vacuum state, so that the waste fluids can be quickly drawn into it.

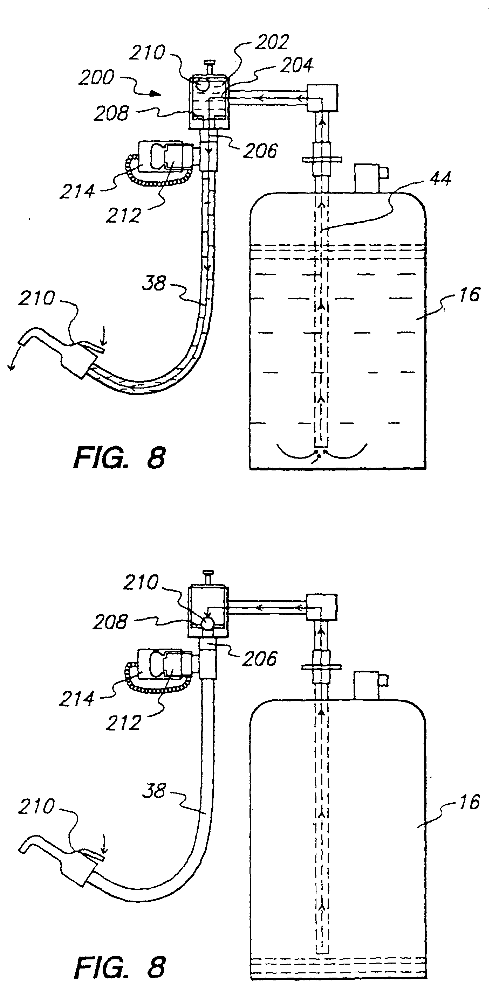

The new fluid container 16 has a new fluid delivery hose 38, connected at one end 40 to a new fluid delivery valve 42, which has a feed pipe 44 extending down to near the bottom of the new fluid container 16. A feed nozzle and delivery valve 46 is connected to the free end 48 of the new fluid delivery hose 38. The secondary new fluid tank 16 carries a blanket of inert gas, such as nitrogen, which pressurizes the new fluid in the new fluid container 16, and propels it out through the feed pipe 44, new fluid delivery valve 42, delivery hose 38 and out the feed nozzle and delivery valve 46 when it is opened. Since the new fluid exits the container 16 through the feed pipe 44 near the bottom of the container 16, the quantity of nitrogen gas will remain substantially unchanged in the new fluid container 16 as the new fluid in the container 16 is depleted, unless of course, the level of new fluid in the container 16 drops below the level of the inlet 50 of the feed pipe 44. This will not normally occur, however, because as the level of new fluid in the secondary new fluid tank 16 drops, so does the gas pressure in it, and the speed at which the new fluid can be feed out. This feature will remind the operator that it is time to recharge the new fluid container 16 with new fluid. The new fluid container 16 is equipped with a reloading valve 52 arrangement with a short stub pipe 54 extending a short distance into the container 16, and an inlet 56. The container 16 is refilled with new fluid through the reloading valve 52 arrangement, as will be discussed below. An optional floating ball valve arrangement, shown in Figs. 8-10, as described further below, can also be used to prevent nitrogen from escaping.

The secondary containers 14 and 16 and related parts are preferably mounted on a wheeled cart 58, to allow the secondary portion of the system 10 to be quickly and easily wheeled around and delivered to the desired work site. Unlike prior systems, no pumps, batteries, or electronic components need be incorporated into the secondary system 10, thereby providing a simpler, more reliable, lighter weight, and lower cost system.

In order to avoid confusion, the secondary waste fluid container 14 is coded, for example by a single encircling line (not shown), preferably of a distinct color such as blue, which line (not shown) denotes, by its placement near the bottom of the secondary waste fluid container 14, that it is dedicated to a particular type of waste fluid, for example, Shell® 30 wt. motor oil, as opposed to Texaco® 10-40 wt., and no other waste motor oil. Similarly, other waste fluid containers can be provided to contain any of the waste fluids which must be periodically replaced in a vehicle or machinery. For example, dedicated waste fluid containers can be provided to contain, for example, other types of waste motor oils which should be collected individually, waste hydraulic fluid, waste automatic transmission fluid, and waste coolant, just to name a few of the possible waste fluids. The new fluid containers 16 can be similarly be identified by single encircling lines (not shown) of the corresponding color, near the top of the container 16.

The secondary portion of the system 10 is utilized, for example, to carry out a vehicle oil change, in the following manner. First, the waste motor oil from a vehicle 12 is removed as follows. The nozzle attachment 26 is connected to the quick release fitting 28 on the oil pan 30 of the vehicle. The valve 22 on the secondary waste fluid container 14 is then opened up. The vacuum in the secondary waste fluid container 14 will immediately vacuum the waste motor oil from the oil pan 30 of the vehicle 12 through the waste fluid hose 18 into the waste fluid container 14. If the vehicle's 12 oil filter is to be replaced, it is done at this point. After the waste motor oil is removed from the vehicle 12 (and the oil filter replaced, if applicable), the new motor oil can immediately be delivered to the vehicle 12 from the new motor oil containers 16. Of course, the secondary portion of the system can be used to remove any number of waste fluids from and deliver new fluids to a vehicle or machine.

It will be seen that the identity of the new fluid containers 16 and waste fluid containers 14 will be clearly distinguishable at a glance by operators, waste oil haulers, recyclers, and workers.

Referring to Figure 2, after one or more fluid changes have been accomplished at the site of the vehicle or machinery, the secondary system 10 is wheeled back to the location of the primary system 60, which can be placed wherever desired. The primary system 60 consists of a series of dedicated sealed waste fluid containers 62 (only one of which is shown), for collection of particular waste fluids 64 from the secondary waste fluid containers 14, and a series of primary new fluid containers 66 (only one of which is shown), containing a particular new fluid 68. The primary waste and new fluid containers 62 and 66 have a substantially larger volume than the secondary waste and new fluid containers 14 and 16, i.e. in the range of 175 to 250 gallons. The primary waste fluid container 62 is connected to a vacuum source 70, such as a vacuum pump or venturi generated vacuum, via a vacuum line 72. Ideally, a pressure sensor 74 will provide feedback as to the state of the vacuum in the primary waste fluid container 62, and thereby control the application of vacuum from the vacuum source 70, and thereby maintain a relatively constant vacuum in the primary waste fluid container 62. The primary waste fluid container 62 has a waste fluid drawing valve 76 with a short stub pipe 78 extending into the primary waste fluid container 62, and a inlet 80 connected to a primary waste fluid suction hose 82. The terminal end 84 of the waste fluid hose 82 is adapted to air tightly attach to the outlet 36 on the emptying valve 32 of the secondary waste fluid container 14. When the waste fluid drawing valve 76 is opened, the vacuum at the top space of the primary waste fluid container 62 will thus vacuum the waste fluid from the secondary waste fluid container 14 via its secondary waste fluid feed tube 34. As the waste fluid is removed from the secondary waste fluid container 14, the vacuum pressure in the secondary waste fluid container 14 will be lowered to that of the primary waste fluid containers 62, and the secondary waste fluid container 14 will be readied for receiving additional waste fluid at the site of the vehicle or machinery.

The primary new fluid container 66 has a constant source of inert gas feed to it, at a predetermined pressure. The inventor has found that a nitrogen gas cylinder 86 with a pressure regulator 88, piped via pipe 90 to the new fluid cylinder 66 is a convenient and low cost way to maintain a constant inert gas pressure in the primary new fluid container 66, regardless of the volume of new fluid 68 contained therein. For example, a nitrogen gas pressure of 100 lbs/in² will provide ample pressure to rapidly convey the new fluid 68 from the primary new fluid container 66 to the secondary new fluid container 16 during it recharging, as will be described below. A new fluid outlet valve 92 is provided on the primary new fluid container 66. The new fluid outlet valve 92 has a primary new fluid feed tube 94 with an open end which extends to near the bottom of the primary new fluid container 66. A primary new fluid supply hose 94 is connected at a first end 96 to the valve 92, and has a coupler 98 on its free end, which is adapted to fluid tightly connect with the inlet 56 on the valve 52 of the secondary new fluid container 16. When the secondary new fluid container 16 is returned to the site of the primary portion 60 of the system, it remains loaded with a predetermined quantity of nitrogen gas, but at a lower pressure than the gas in the primary new fluid container 66. Due to the nitrogen gas pressure differentials, the nitrogen gas will continue to "push" the new fluid 68 from the primary new fluid container 66 to the secondary new fluid container 16 until the gas pressure in the secondary new fluid container 16 equals that in primary new fluid container 66. This feature ensures that the desire quantify of new fluid will automatically be loaded into the secondary new fluid container 16, without constant monitoring by an attendant.

In order to provide extra safety, the primary waste and new fluid containers 62 and 66 are preferably located within safety tubs 100, which have an internal volume greater than that of the containers 62 and 66, and thus are available to catch the contents of waste or new fluid tanks 62 and 66 in the event of leakage.

When the primary waste fluid container 62 is full, its waste fluid is vacuum removed therefrom up through a primary waste fluid container feed tube 102 through valve 104 through a hose (not shown) which a waste fluid hauler will connect to his or her truck, again into a dedicated container, thereby retaining the segregation of the particular waste fluid steams. The particular waste fluids are then transportation to the recycler in a conventional manner. In the case of depleted primary new fluid containers 66, they can be recharged via the new fluid outlet valve 92, or, alternately, through a separate opening (not shown).

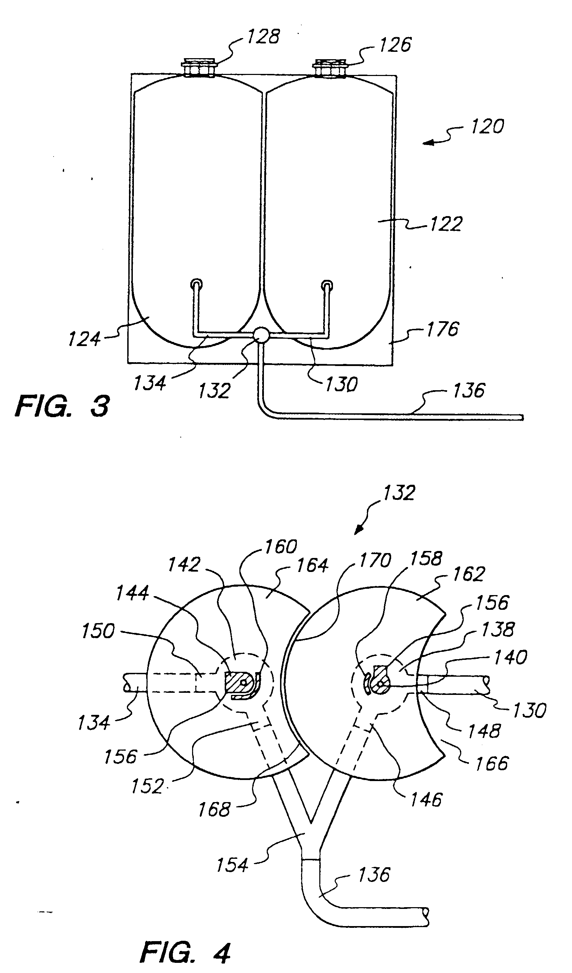

Another embodiment of a secondary portable system 120 is shown in FIG. 3. In this embodiment, the system 120 is designed for a single oil change by do-it-yourselfers. It includes a secondary waste oil cylinder 122 and a secondary new oil cylinder 124. The secondary waste oil fluid cylinder 122 is a pressure vessel which carries a vacuum and the secondary new oil cylinder 124 is a pressure vessel which carries a predetermined amount of new motor oil, such as three, four, or five quarts, which is what is required by the vast majority of vehicles.

The inventor has found that a waste fluid cylinder 122 having an internal volume of about 3.25 gallons works well to suction up to about five quarts or less of waste motor oil. A waste oil drain and evacuation opening with check valve 126 is provided on the waste oil cylinder 122. A new oil fill and pressurizing opening with check valve 128 is provided on the new oil cylinder 124 for recharging it with new oil. The waste oil cylinder 122 is connected via a waste oil inlet tube 130 to a four-way valve unit 132. The new oil cylinder 124 is also connected to the four-way valve unit 132, via a new oil outlet tube 134. The four-way valve unit 132 is connected to a dipstick suction tube 136 which is flexible enough and has a cross-section small enough to fit down the dipstick opening of the motor of a vehicle and extend to the bottom of the oil pan 130 of the motor.

The four-way valve unit 132 is designed in such a way that the waste oil must first be removed before the new oil can be delivered, and is described with reference with FIGS. 4-7. The four-way valve unit 132 comprises a waste oil, ball valve 138 with a control handle 140 for controlling the flow of waste oil, and a new oil ball valve 142 with a control handle 144 for control the flow of new oil. The waste oil control valve 138 and new oil control valve 142 are located adjacent each other. The waste oil control valve 138 has a waste oil inlet 146, and a waste oil outlet 148 which is connected to the waste oil inlet tube 130. The new oil control valve 142 has a new oil inlet 150, which is connected to the new fluid tube 134, and a new outlet 152. The waste oil inlet 146 and new oil outlet 152 are interconnected at a fluid junction 154 of the four-way valve unit 132, to which the dipstick suction tube 136 is connected. The control handles 140 and 144 each have a stop 156 positioned thereon, which in conjunction with a waste oil stop 158 and a new oil stop 160 positioned on the four-way valve unit 132 limit the degree of rotation of the control handles 140 and 144, and thus the opening and closing of their control valves 138 and 142. The waste oil stop 150 is sized and shaped to allow the waste oil control handle 140 to rotate about one-half a turn, while the new oil stop 160 is sized and shaped to permit the new oil control handle 144 to rotate about one-quarter of a turn.

The waste oil control valve 138 and the new oil control valve 142, respectively, have rotation limiting disks 162 and 164 fixed on their handles 140 and 144. The limiting disks 162 and 164 are generally circular in shape, and have crescent-shaped indent portions 166 and 168. The valves 138 and 142 are spaced apart such that a portion of the perimeter of the circular portion of one limiting disk 162 or 164 can pass close to the crescent shaped indent portions 166 or 168. Exactly how these limiting disks 162 and 164 function to determine the order of opening of the valves 138 and 142 will now be described with reference to the FIGS. 4-7.

Referring to FIG. 4, the four-way valve 132 is shown with the waste oil valve 138 and new oil valve 142 closed. In this position, the perimeter portion 170 of the waste oil limiting disk 162 will ride adjacent to the crescent shaped indent portion 168 of the new oil limiting disk 164. The new oil valve handle 144 will thus be prevented from being moved from its closed position, and neither waste oil will flow through the waste fluid valve 138 into the waste fluid cylinder 122, nor will new oil will flow out of the new oil cylinder 124 through the new oil valve 142. This is the position of the four-way valve unit 132 when it is received by the end user from the retailer.

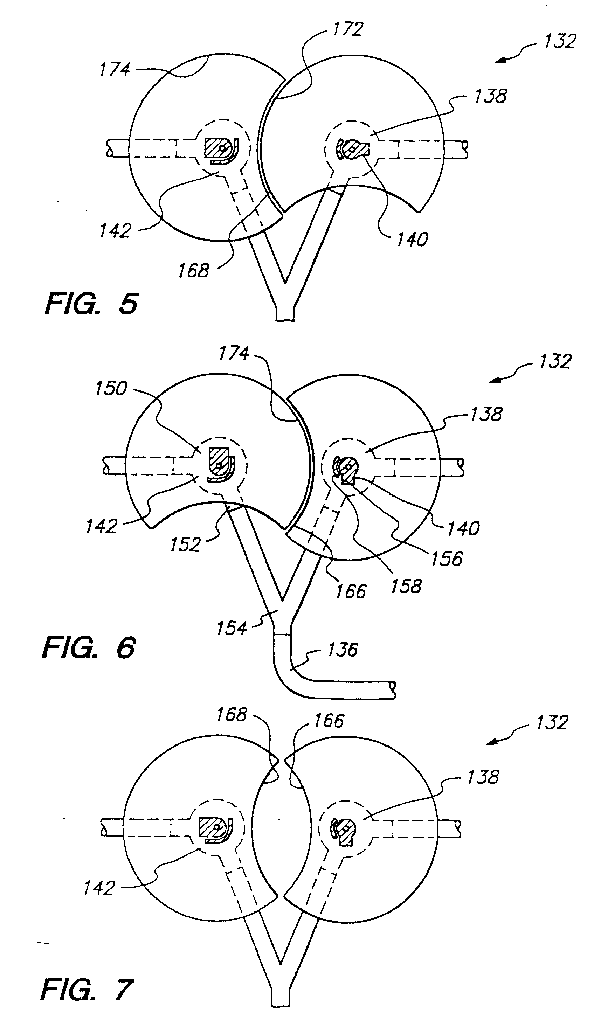

FIG. 5 shows the four-way valve 132 with the waste oil valve 138 opened, with the waste oil valve handle 140 turned one-quarter turn clockwise from its closed position shown in FIG. 4. The perimeter portion 172 of the waste oil limiting disk 162 will ride adjacent to the crescent shaped indent portion 168 of the new oil limiting disk 164 in this position, and continue to prevent the new oil valve 142 from being opened. After the dipstick tube 136 is placed into the motor to extend down into its oil pan, the waste oil valve handle 140 is operated as above described to suction up the waste oil from the oil pan 130 of a vehicle 12.

FIG. 6 shows the four-way valve 132 with the waste oil valve 138 closed by turning its waste oil valve handle 140 an additional one-quarter turn from its open position of FIG. 5, to its closed position of FIG. 6. In this position, the waste valve handle stop 156 will impinge on the stop 158 on the valve, thereby preventing the waste oil valve 138 from being turn clockwise any further. If the oil filter (not shown) is to be replaced¹, it is at this point that the user can replace the old oil filter with a new one. The old oil filter can then be placed in a leakproof oil filter compartment (not shown) in the secondary portable oil change system 120. In the position shown in FIG. 6, the crescent shaped indent portion 166 of the waste oil limiting disk 162 will be in close proximity to the perimeter of the new oil limiting disk 164, and allow it to be turned, for the first time, clockwise by one-quarter turn, to bring its perimeter portion 174 into the space of the crescent shaped indent portion 166 of the waste oil valve handle 140. This puts the new oil valve 142 in its open position, and new oil will flow from the new oil cylinder 124 through the new oil inlet 150, the new oil value 142, out the outlet 152, out the fluid junction 154, and out through the dipstick tube 136 to the vehicle's motor. After the desired amount of new oil is placed in the motor of the vehicle, the new oil valve 142 will be turned off by turning it one-quarter turn counterclockwise, as best shown in FIG. 7, so that the crescent shaped indent portions 166 and 168 face each other.
¹ Contrary to advertising by oil filter manufacturers that oil filters should be replaced with each oil change, oil filters actually only need replacement every other oil change.

Referring again to FIG. 3, the waste and new oil cylinders 122 and 124, the four-way valve unit 132 and the dipstick tube 136 comprising the portable secondary unit 120 of FIG. 3 are placed in a case 176, thereby allowing it to be conveniently transported to the site of the vehicle, placed, for example, in the engine well during the oil change, and then returned to the secondary unit 120 retailer when the oil change is completed.

The inventor envisions that auto part retailers, discount stores, and other outlets will sell these secondary portable oil change systems 120 for a price somewhat higher than the cost of the new oil inside, and charge a refundable "core" deposit for return of the system. After the oil change is completed, the do-it-yourselfer will then return the waste oil filled and new oil depleted system 120 to the retailer, where the retailer can either recharge the system on site, or have an outside service do it off site, with a primary system as described above. The advantage of this do-it-yourself oil change system is that it can be made available at a cost which is not significantly higher than the purchase price of oil in quart containers, but less expensively than the cost of an oil change at a service station or a quick oil change facility. Another advantage is the cleanliness and simplicity of the system, which will prevent spillage of oil, or the dumping of waste oil, which is a common but serious problem with present day do-it-yourself oil changes.

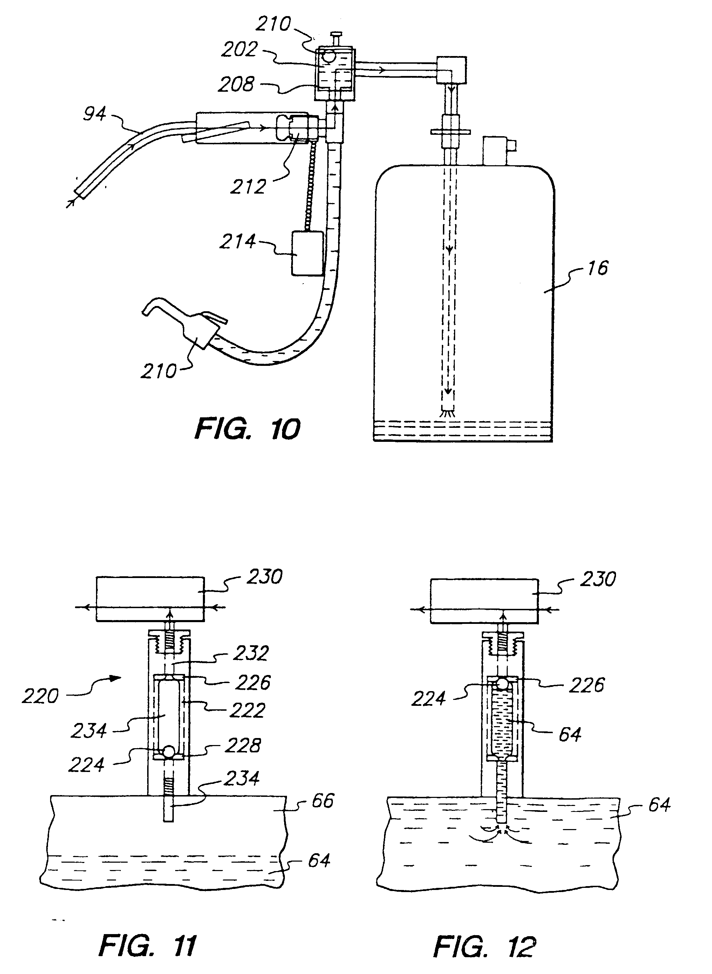

The invention provides optional convenience and safety features for the secondary system 10. The secondary new fluid container 16 of FIGS. 1 can be fitted, if desired, with a floating ball check valve 200, as best shown in FIGS. 8-10. The floating ball check valve 200 is in fluid attachment with the new fluid feed pipe 44. The floating ball check valve 200 has a fluid chamber 202 with a fluid inlet side 204 and a fluid outlet side 206 with a ring-shaped seat 208. A floating aluminum ball 210 is sized to liquid and gas tightly seat on the seat 208, and thereby seal off the fluid outlet side 206 when the fluid chamber 202 is not filled with fluid, which is the condition when the secondary new fluid container 16 is empty, as is best shown in FIG. 9. As shown in FIG. 8, when the new fluid container 16 is charged with new fluid, the floating aluminum ball 210 floats in the fluid filled chamber 202 without blocking the fluid outlet 206. When the user desires to feed new fluid to a machine or vehicle, he or she will merely operate the nozzle 210, and new fluid will exit the new fluid container 16 up through the new fluid feed pipe 44, into the fluid chamber 202 and out the fluid side outlet 206 through the hose 38 and nozzle 210.

In order to recharge the new fluid container 16, new fluid is introduced into the new fluid container 16 via a fluid charging inlet or port 212 which is normally sealed off by a sealing cap 214. See FIG. 10. The new fluid enters the fluid charging inlet 212 via hose 94, and floats the aluminum float ball 210 off of its seat 208, thereby filling the fluid chamber 202 with new fluid, which flows into the new fluid container 16. Because the nozzle 210 is closed, no fluid will escape from it. The presence of fluid in the fluid chamber 202 will prevent inert gas from exiting the new fluid container 16 during its recharging.

FIGS. 11 and 12 depict a floating check valve 220 which can be utilized in conjunction with pressurized air (such as is readily available from air tanks and pumps) to put a vacuum on the primary waste fluid tank 62 of FIG. 2, in lieu of a vacuum pump 70. The floating check valve has a vacuum chamber 222 with a hollow aluminum float ball 224 contained inside. An upper ring seat 226 and lower ring seat 228 are present at the top and bottom, respectively, of the vacuum chamber 222. A venturi tube 230 is in fluid communication with an air channel 232 leading to the upper ring seat 226, and the lower ring seat 228 is in fluid communication with a short stub tube 234 which extends down a short way into the top of the primary waste fluid container 66, in its evacuated air space. When pressurized air is made to flow through the venturi tube 230 (as shown by the direction arrows), air will be drawn out of the waste fluid container 66 through the short stub tube 234, the lower ring seat 228, the vacuum chamber 222, and the upper ring seat 226. So long as the air pressure in the waste fluid container 66 exceeds that created in the vacuum chamber 222, the hollow aluminum float ball 224 will not seat completely on the lower ring seat 228, and air will continue to be drawn out of the waste fluid container 66. When the relative vacuum pressure between the vacuum chamber 222 and the inside of the waste fluid container 66 have been equalized, the hollow aluminum float ball 224 will finally air tightly seat on the lower ring seat 228, thereby retaining the vacuum in the waste fluid container 66. As a precautionary feature, in the unlikely event that the waste fluid container 66 is attempted to be overfilled with waste fluid 64, and the waste fluid 64 enters the vacuum chamber 222, the hollow aluminum float ball 224 will float up and seat on the upper ring seat 226, and thereby prevent any waste fluid from inadvertently leaking out of the waste fluid container 66 through the venturi tube 230. A see through window 234 is preferably provided on the vacuum chamber 222 so that its interior may be view.

Although only single pairs of waste fluid primary-secondary containers and new fluid primary-secondary containers are shown, it is to be understood that any number of waste and new fluid primary-secondary containers can be provided, to accommodate the requirements of the vehicle or machine user.

## Claims

1. A waste fluid recovery and new fluid delivery system for recovering particular waste fluids from waste fluid sources such as vehicles and/or machines, and delivering particular new fluids to said waste fluid sources now acting as new fluid utilizers, such as vehicles and/or machines, comprising:
(a) a portable secondary portion (10) of the system (8), comprising sealed secondary waste fluid pressure containers (14), each with a waste fluid conduit means (18), for collection of a particular waste fluid from said waste fluid source, through said waste fluid conduit means (18) and into said sealed secondary waste fluid pressure container (14), and sealed secondary new fluid pressure containers (16), each with a new fluid conduit means (38), for delivery of a particular new fluid to said new fluid utilizer (12); said secondary new fluid containers (16) containing, in use, an inert gas for providing motive force to convey the new fluid to the new fluid utilizer; and
(b) a stationary primary portion (60) of the system (8) to ready the portable secondary portion (10) of the system (8) for reuse after its waste fluid containers (14) are full and its new fluid containers (16) are empty, said stationery primary portion (60) comprising sealed primary waste fluid pressure containers (62), each connected to a vacuum generating source (70), and having a primary waste fluid suction conduit (82) for suctioning waste fluid and air from an associated secondary waste fluid container (14) when the primary (62) and secondary (14) waste fluid containers are connected, thus placing a vacuum on said secondary waste fluid containers (14).; and sealed primary new fluid containers (66) containing new fluid, each said sealed primary new fluid container (66) having connected to it an inert gas supply (86) for supplying pressurized inert gas pressure to said new fluid container (66), and a primary new fluid delivery conduit (94) for delivering new fluid to said secondary new fluid container (16); wherein each waste fluid container (14) is paired with a corresponding specifically coded and dedicated new fluid container (16), said pairing helping to ensure that the same type of a particular waste fluid stream and new fluid stream will be collected from, and delivered to, respectively, a vehicle or machinery (12), to thereby help ensure that a particular waste fluid stream, and no other, is collected in its appropriate waste fluid container (14).

2. A system as claimed in claim 1, for changing the motor oil of a motor vehicle (12), further comprising:
a portable housing means (58) to contain said secondary waste (14) and new fluid (16) containers;
a multi-position valve unit means (132) in selectable fluid connection with said secondary waste fluid conduit means (18) and said secondary new fluid conduit means (38), said multi-position valve unit (132) requiring that waste motor oil must first be drawn into said secondary waste fluid container (14) before new motor fluid can be delivered from said new fluid container (16); and
a flexible dipstick fluid tube (136) which is fluidly connected to said multi-position valve unit means (132), said flexible dipstick fluid (136) tube being sized so that it can reach the bottom of an oil pan (130) of a motor of a vehicle (12), wherein waste motor oil can be withdrawn from the motor of the vehicle (12), and replaced with new motor oil via said flexible dipstick fluid tube (136).

3. A system as claimed in claim 2, wherein the multi-position fluid valve unit (132) comprises two adjacent valves (138, 142), one (138) for controlling flow of waste oil into the secondary waste fluid container (14) and one (142) for controlling flow of new oil out of the secondary new fluid container (16), each having a circular disk plate (162, 164) attached thereto and lying generally on a same plane, each said circular disk plate (162, 164) having a crescent shaped indent portion (168) removed, such that the position of the two circular disk plates (162, 164) will not allow the two adjacent valves to be opened simultaneously, and said circular disk plates (162, 164) requiring that the valve (138) for controlling the flow of waste motor oil must be turned on, and then off, before the valve (142) to control the flow of new motor oil can be turned on, and then off.

4. A system as claimed in any of claims 1-3, further comprising a secondary new fluid container fluid outlet tube (44) extending to near the bottom of the secondary new fluid container, and a floating ball check valve (200) which allows new fluid to exit and enter the secondary new fluid container (16), but prevents inert gas from exiting therefrom, said floating ball check valve (200) comprising a fluid chamber (202) with a fluid inlet (204) at a upper portion, a fluid outlet (206) at a lower portion, a ring-shaped seat (208) at a lower portion, above said fluid outlet (206), and a floating ball (210) contained in the fluid chamber (202) which fluid and gas tightly seats on said ring-shaped seat (208) when no fluid is present in the fluid chamber (202), which corresponds to a condition wherein the secondary new fluid container (16) is empty.

5. A system as claimed in claim 4, wherein said floating ball check valve (200) further comprises a new fluid recharging port (212) in fluid connection with said fluid outlet (206), said new fluid recharging port (212) being sealable when said secondary new fluid container (16) is not being recharged with new fluid.

6. A system as claimed in any of claims 1-3, further comprising a floating point check valve (200) for utilizing a venturi effect to create a vacuum in the primary waste fluid container (62), said floating point check valve (200) comprising:
a vacuum chamber (222) with air openings at its upper and lower ends;
ring-shaped seats (226, 228) located at the upper and lower ends of the vacuum chamber (222), surrounding the air openings;
a floating ball (224) sized to gas tightly and fluid tightly seat with the upper (226) and lower (228) ring-shaped seats, and thereby block off gas and fluid flow therethrough;
an air ingress tube (236) in communication with the air opening at the lower end of the vacuum chamber (222) and extending slightly into the primary waste fluid container;
a venturi tube (230); and
an air egress tube (232) in communication with the air opening at the top of the vacuum chamber (222) and with said venturi tube (230), said venturi tube (230) being generally perpendicular to the air egress tube (234); wherein when air is rapidly passed through said venturi tube (230), air will be drawn out of said primary waste fluid container (62), and when said vacuum pressure in said primary waste fluid container (62) equalizes with the low pressure created in said vacuum chamber (222), the floating ball (224) will gas and fluid tightly seat on the lower ring-shaped seat (226), and if waste fluid inadvertently enters the vacuum chamber (222), the floating ball (210) will float upwardly and fluid tightly seat on the upper seat (228) and thereby prevent waste fluid from leaking out of the vacuum chamber (222).

7. A system as claimed in any of claims 1-6, wherein gaseous pressure in said secondary new fluid container (16) provides the motive force to deliver new fluid to said fluid utilizer.

8. A method of recovery and reuse of at least a plurality of different oil-based waste fluid streams used by vehicles at different sites and delivery of a plurality of different new or reprocessed oil-based fluid streams used by vehicles and machinery, at different sites, comprising the steps of:
(a) providing portable unfilled segregated and separate, sealable and reusable waste fluid containers (14), each of which is identifiable from other identifiable containers, each of which is dedicated to contain only one particular oil-based waste fluid stream and no others at sites of vehicles and machinery to thereby prevent cross-mixing of different waste lubricant streams in said dedicated waste fluid containers (14);
(b) discharging each of a plurality of said different oil-based waste fluid streams into said segregated and separate waste fluid containers (14) ;
(c) delivering said plurality of said different, and now segregated oil-based waste fluid streams from said segregated and separate waste fluid containers (14) to containers connected to a vacuum generating source for suctioning waste fluid and air from said segregated and separate waste fluid containers, and hence to reprocessing facilities to produce a plurality of segregated and separate reprocessed oil-based fluid streams suitable for reuse, thereby readying said segregated and separate waste fluid containers (14) for refilling, with one particular oil-based fluid stream, at the different sites of vehicles and machinery, without intervening cleaning and reconditioning of said waste fluid containers (14);
(d) providing a plurality of said new, or reprocessed, oil-based fluid streams, each of the same type as said plurality of said different oil-based waste fluid streams for use by vehicles and machinery, in segregated and separate, portable, sealable, new fluid containers (16) having, in use, an inert gas therein, at the different sites of said vehicles;
(e) delivering said new, or reprocessed, oil-based fluid streams to said vehicles and machinery the motive force for which delivery is said inert gas; and
(f) replenishing said segregated and separate new fluid containers (16) with new or reprocessed oil-based fluid streams, without intervening cleaning and reconditioning of said new fluid containers (16); wherein each of said waste fluid containers (14) is paired with a corresponding specifically coded and dedicated new fluid container (16), said pairing helping to ensure that the same type of a particular waste oil-based fluid stream and new oil-based fluid stream will be collected from, and delivered to, respectively, a vehicle or machinery, to thereby help ensure that a particular oil-based waste fluid stream, and no other, is collected in its proper waste fluid container (14).

9. A method as claimed in claim 8, wherein said plurality of said different oil-based waste fluid streams are delivered to said reprocessing facilities in said segregated and separate waste fluid containers (14).

10. A method as claimed in claim 8 or claim 9, wherein said plurality of said different oil-based waste fluid streams are delivered to said reprocessing facilities in other segregated and separate waste fluid containers (14), by emptying said oil-based waste fluid streams into said other segregated and separate waste fluid containers at the different sites of vehicles and machinery.

11. A method as claimed in any of claims 8-10, wherein said replenishing of said segregated and separate new fluid containers (16) occurs at the different sites of the vehicles and machinery.

12. A method as claimed in any of claims 8-11, wherein said replenishing of said segregated and separate new fluid containers (16) occurs at sites other than the different sites of the vehicles and machinery.

13. A method as claimed in any of claims 8-12, wherein steps (c)-(f) occur in a single cycle of operation.

14. A method as claimed in any of claims 8-13, wherein said waste fluid containers (14) and said new fluid containers (16) are sealed pressure vessels capable of withstanding pressure and vacuum.

15. A method as claimed in any of Claims 8-14, wherein the step of discharging each of the different waste fluid streams into separate, dedicated and reusable and sealable containers is accomplished by fluid tightly connecting a waste fluid conduit (18) between the vehicle or machines and the separate, dedicated and reusable and sealable container (14), and applying a vacuum to the container(14), thereby causing the waste fluid stream to flow out of the vehicle, through the waste fluid conduit (18), and into the container (14) in a fluid tight manner, thereby preventing anything but waste fluid from entering the container (14).

## Patentansprüche

1. Abfallfluidrückgewinnungs- und Beförderungssystem für neues Fluid zum Rückgewinnen bestimmter Abfallfluids aus Abfallfluidquellen so wie Fahrzeugen und/oder Maschinen, und zum Befördern bestimmter neuer Fluids zu den genannten Abfallfluidquellen, die jetzt als Benutzer von neuem Fluid dienen, so wie Fahrzeuge und/oder Maschinen, umfassend:
(a) einen tragbaren sekundären Teil (10) des Systems (8), der abgedichtete sekundäre Druckbehälter (14) für Abfallfluid jeweils mit einem Abfallfluid-Leitungsmittel (18) für Sammlung eines bestimmten Abfallfluids aus der genannten Abfallfluidquelle durch das genannte Abfallfluid-Leitungsmittel (18) und in den genannten abgedichteten sekundären Druckbehälter (14) für Abfallfluid, und abgedichtete sekundäre Druckbehälter (16) für neues Fluid jeweils mit einem Leitungsmittel (38) für neues Fluid für Beförderung eines bestimmten neuen Fluids zu dem genannten Benutzer (12) von neuem Fluid aufweist; wobei die genannten sekundären Behälter (16) für neues Fluid in Gebrauch ein inertes Gas zum Bereitstellen von Antriebskraft enthalten, um das neue Fluid zu dem Benutzer von neuem Fluid zu befördern; und
(b) einen stationären primären Teil (60) des Systems (8), um den tragbaren sekundären Teil (10) des Systems (8) für Wiederverwendung bereitzumachen, nachdem seine Abfallfluidbehälter (14) voll sind und seine Behälter (16) für neues Fluid leer sind, wobei der genannte stationäre primäre Teil (60) abgedichtete primäre Druckbehälter (62) für Abfallfluid, die jeweils mit einer Vakuumerzeugungsquelle (70) verbunden sind und eine primäre Abfallfluid-Saugleitung (82) zum Saugen von Abfallfluid und Luft aus einem verknüpften sekundären Abfallfluidbehälter (14) aufweisen, wenn der primäre (62) und sekundäre (14) Abfallfluidbehälter verbunden sind, wodurch ein Vakuum auf den genannten sekundären Abfallfluidbehältern (14) vorgesehen wird; und neues Fluid enthaltende abgedichtete primäre Behälter (66) für neues Fluid, wobei mit jedem genannten abgedichteten primären Behälter (66) für neues Fluid eine Zuführung von inertem Gas (86) zum Zuführen von unter Druck stehendem inertem Gasdruck zu dem genannten Behälter (66) von neuem Fluid verbunden ist, und eine primäre Förderleitung (94) für neues Fluid zum Befördern von neuem Fluid zu dem genannten sekundären Behälter (16) für neues Fluid aufweist; wobei jeder Abfallfluidbehälter (14) mit einem entsprechenden, spezifisch codierten und zweckgebundenen Behälter (16) für neues Fluid gepaart ist, wobei die genannte Paarung hilft, sicherzustellen, daß der gleiche Typ eines bestimmten Abfallfluidstroms und eines Stroms von neuem Fluid von einem Fahrzeug oder einer Maschine (12) gesammelt bzw. dorthin befördert wird, um dadurch zu helfen, sicherzustellen, daß ein bestimmter Abfallfluidstrom, und kein anderer, in seinem geeigneten Abfallfluidbehälter (14) gesammelt wird.

2. System nach Anspruch 1 zum Auswechseln des Motorenöls eines Kraftfahrzeugs (12), das weiter umfaßt:
ein tragbares Gehäusemittel (58) zum Enthalten der genannten sekundären Abfallbehälter (14) und Behälter (16) für neues Fluid;
ein mehrere Positionen aufweisendes Ventileinheitmittel (132) in auswählbarer Fluidverbindung mit dem genannten sekundären Abfallfluidleitungsmittel (18) und dem genannten sekundären Leitungsmittel (38) für neues Fluid, wobei die genannte mehrere Positionen aufweisende Ventileinheit (132) erfordert, daß Abfallmotoröl zuerst in den genannten sekundären Abfallfluidbehälter (14) gesaugt wird, bevor neues Motorfluid von dem genannten Behälter (16) für neues Fluid zugeführt werden kann; und
ein flexibles Meßstab-Fluidrohr (136), das fluidmäßig mit dem genannten mehrere Positionen aufweisenden Ventileinheitmittel (132) verbunden ist, wobei das genannte flexible Meßstab-Fluidrohr (136) solche Abmessungen aufweist, daß es den Boden einer Ölwanne (130) eines Motors eines Fahrzeugs (12) erreichen kann, wobei Abfallmotoröl aus dem Motor des Fahrzeugs (12) abgezogen und über das genannte flexible Meßstab-Fluidrohr (136) mit neuem Motoröl ersetzt werden kann.

3. System nach Anspruch 2, bei dem die mehrere Positionen aufweisende Fluidventileinheit (132) zwei benachbarte Ventile (138, 142) aufweist, eines (138) zum Steuern des Flusses von Abfallöl in den sekundären Abfallfluidbehälter (14) und eines (142) zum Steuern des Flusses von neuem Öl aus dem sekundären Behälter (16) für neues Fluid, die jeweils eine daran befestigte kreisförmige Scheibenplatte (162, 164) umfassen und allgemein in der gleichen Ebene liegen, wobei bei jeder genannten kreisförmigen Scheibenplatte (162, 164) ein mondförmiger eingekerbter Teil (168) entfernt ist, so daß die Position der beiden kreisförmigen Scheibenplatten (162, 164) ein gleichzeitiges Öffnen der beiden benachbarten Ventile nicht zulassen wird, und wobei die genannten kreisförmigen Scheibenplatten (162, 164) erfordern, daß das Ventil (138) zum Steuern des Flusses von Abfallmotoröl eingeschaltet werden muß, und dann abgeschaltet werden muß, bevor das Ventil (142) zum Steuern des Flusses von neuem Motoröl eingeschaltet und dann abgeschaltet werden kann.

4. System nach einem der Ansprüche 1-3, das weiter ein sekundäres Fluidauslaßrohr (44) des Behälters für neues Fluid, welches sich nahe dem Boden des sekundären Behälters für neues Fluid erstreckt, und ein Sperrventil (200) mit schwimmender Kugel umfaßt, das Austritt von neuem Fluid und Eintritt desselben in den sekundären Behälter (16) für neues Fluid zuläßt, jedoch verhindert, daß inertes Gas aus diesem austritt, wobei das genannte Sperrventil (200) mit schwimmender Kugel eine Fluidkammer (202) mit einem Fluideinlaß (204) an einem oberen Teil, einem Fliudauslaß (206) an einem unteren Teil, einen ringförmigen Sitz (208) an einem unteren Teil über dem genannten Fluidauslaß (206) und eine schwimmende Kugel (210) enthalten in der Fluidkammer (202) aufweist, welche fluid- und gasdicht auf dem genannten ringförmigen Sitz (208) sitzt, wenn kein Fluid in der Fluidkammer (202) vorhanden ist, was einer Bedingungen entspricht, in der der sekundäre Behälter (16) für neues Fluid leer ist.

5. System nach Anspruch 4, bei dem das genannte Sperrventil (200) mit schwimmender Kugel weiter einen Nachfüllanschluß (212) für neues Fluid in Fluidverbindung mit dem genannten Fluidauslaß (206) aufweist, wobei der genannte Fluidnachfüllanschluß (212) abgedichtet werden kann, wenn der genannte sekundäre Behälter (16) für neues Fluid nicht mit neuem Fluid nachgefüllt wird.

6. System nach einem der Ansprüche 1-3, das weiter ein Sperrventil (200) mit schwimmender Spitze zum Nutzen eines Venturi-Effekts zum Erzeugen eines Vakuums in dem primären Abfallfluidbehälter (62) aufweist, wobei das genannte Sperrventil (200) mit schwimmender Spitze umfaßt:
eine Vakuumkammer (222) mit Luftöffnungen an ihrem oberen und unteren Ende;
ringförmige Sitze (226, 228), die an dem oberen und unteren Ende der Vakuumkammer (222) angeordnet sind und die Luftöffnungen umschließen;
eine schwimmende Kugel (224) mit Abmessungen, um gasdicht und fluiddicht in dem oberen (226) und unteren (228) ringförmigen Sitz zu sitzen, und dadurch Gas- und Fluidfluß durch diese zu blockieren;
ein Lufteintrittsrohr (236) in Kommunikation mit der Luftöffnung am unteren Ende der Vakuumkammer (222), das sich etwas in den primären Abfallfluidbehälter erstreckt;
ein Venturi-Rohr (230); und
ein Luftaustrittsrohr (232) in Kommunikation mit der Luftöffnung am oberen Teil der Vakuumkammer (222) und mit dem genannten Venturirohr (230), wobei das genannte Venturi-Rohr (230) allgemein perpendikular zu dem Luftaustrittsrohr (234) ist; wobei, wenn Luft schnell durch das genannte Venturi-Rohr (230) hindurchgeführt wird, Luft aus dem genannten primären Abfallfluidbehälter (62) abgesaugt werden wird, und wenn der genannte Vakuumdruck in dem genannten primären Abfallfluidbehälter(62) gleich dem in der genannten Vakuumkammer (222) erzeugten niedrigen Druck wird, wird die schwimmende Kugel (224) gas- und fluiddicht auf dem unteren ringförmigen Sitz (226) sitzen, und wenn Abfallfluid versehentlich in die Vakuumkammer eintritt (222), wird die schwimmende Kugel (210) nach oben schwimmen und fluiddicht auf dem oberen Sitz (228) sitzen und dadurch verhindern, daß Abfallfluid aus der Vakuumkammer (222) herausleckt.

7. System nach einem der Ansprüche 1-6, bei dem Gasdruck in dem genannten sekundären Behälter (16) für neues Fluid die Antriebskraft zum Befördern von neuem Fluid zu dem genannten Fluidbenutzer bereitstellt.

8. Verfahren zur Rückgewinnung und Wiederverwendung wenigstens einer Vielzahl verschiedener auf Öl basierender Abfallfluidströme, die durch Fahrzeuge an verschiedenen Stellen verwendet werden, und zur Beförderung einer Vielzahl verschiedener neuer oder aufbereiteter, auf Öl basierender Fluidströme, die durch Fahrzeuge und Maschinen an verschiedenen Stellen verwendet werden, welches die Schritte umfaßt:
(a) tragbare ungefüllte gesonderte und getrennte, abdichtbare und wiederverwendbare Abfallfluidbehälter (14) vorzusehen, von denen jeder von anderen identifizierbaren Behältern identifizierbar ist, die jeweils zweckgebunden sind, um nur einen bestimmten auf Öl basierenden Abfallfluidstrom und keine anderen an Stellen von Fahrzeugen und Maschinen zu enthalten, um dadurch Vermischung verschiedener Abfallschmiermittelströme in den genannten zweckgebundenen Abfallfluidbehältern (14) zu verhindern;
(b) jeden einer Vielzahl der genannten verschiedenen, auf Öl basierenden Abfallfluidströme in die genannten gesonderten und getrennten Abfallfluidbehälter (14) abzugeben;
(c) die genannte Vielzahl der genannten verschiedenen und jetzt gesonderten, auf Öl basierenden Abfallfluidströme von den genannten gesonderten und getrennten Abfallfluidbehältern (14) zu Behältern zu befördern, die mit einer Vakuumerzeugungsquelle zum Saugen von Abfallfluid und Luft aus den gesonderten und getrennten Abfallfluidbehältern verbunden sind, und folglich zu Aufbereitungseinrichtungen zum Erzeugen einer Vielzahl gesonderter und getrennter, aufbereiteter, auf Öl basierender, für Wiederverwendung geeigneter Fluidströme, wodurch die genannten gesonderten und getrennten Abfallfluidbehälter (14) für erneutes Füllen mit einem bestimmten, auf Öl basierenden Fluidstrom an verschiedenen Stellen von Fahrzeugen und Maschinen bereitgemacht werden, ohne Reinigung und Überholen der genannten Abfallfluidbehälter (14) zu stören;
(d) eine Vielzahl der genannten Ströme von neuem oder aufbereitetem, auf Öl basierendem Fluid, die jeweils vom gleichen Typ wie die genannte Vielzahl verschiedener auf Öl basierender Abfallfluidströme zur Verwendung durch Fahrzeuge und Maschinen sind, in gesonderten und getrennten tragbaren, abdichtbaren Behältern (16) für neues Fluid, in denen in Gebrauch ein inertes Gas enthalten ist, an den verschiedenen Stellen der genannten Fahrzeuge vorzusehen;
(e) die genannten Ströme von neuem oder aufbereitetem, auf Öl basierendem Fluid den genannten Fahrzeugen und Maschinen zuzuführen, wobei die Antriebskraft für diese Beförderung das genannte inerte Gas darstellt; und
(f) die genannten gesonderten und getrennten Behälter (16) für neues Fluid mit Strömen von neuem oder aufbereitetem, auf Öl basierendem Fluid aufzufüllen, ohne Reinigung und Überholen der genannten Behälter (16) für neues Fluid zu stören; wobei jeder der genannten Abfallfluidbehälter (14) mit einem entsprechenden, spezifisch codierten und zweckgebundenen Behälter (16) für neues Fluid gepaart ist, wobei die genannte Paarung hilft, sicherzustellen, daß der gleiche Typ eines bestimmten, auf Öl basierenden Abfallfluidstroms und eines Stroms von neuem, auf Öl basierenden Fluid von einem Fahrzeug oder einer Maschine gesammelt wird bzw. diesem/dieser zugeführt wird, um dadurch zu helfen, sicherzustellen, daß ein bestimmter, auf Öl basierender Abfallfluidstrom, und kein anderer, in seinem richtigen Abfallfluidbehälter (14) gesammelt wird.

9. Verfahren nach Anspruch 8, bei dem die genannte Vielzahl der genannten verschiedenen, auf Öl basierenden Abfallfluidströme den genannten Aufbereitungseinrichtungen in den genannten gesonderten und getrennten Abfallfluidbehältern (14) zugeführt werden.

10. Verfahren nach Anspruch 8 oder 9, bei dem die genannte Vielzahl der genannten anderen auf Öl basierenden Abfallfluidströme den genannten Aufbereitungseinrichtungen in anderen gesonderten und getrennten Abfallfluidbehältern (14) durch Entleeren der genannten, auf Öl basierenden Abfallfluidströme in die genannten anderen gesonderten und getrennten Abfallfluidbehälter an den verschiedenen Stellen von Fahrzeugen und Maschinen befördert werden.

11. Verfahren nach einem der Ansprüche 8-10, bei dem das genannte Auffüllen der genannten gesonderten und getrennten Behälter (16) für neues Fluid an den verschiedenen Stellen der Fahrzeuge und Maschinen erfolgt.

12. Verfahren nach einem der Ansprüche 8-11, bei dem das genannte Nachfüllen der genannten gesonderten und getrennten Behälter (16) für neues Fluid an anderen Stellen als den verschiedenen Stellen der Fahrzeuge und Maschinen erfolgt.

13. Verfahren nach einem der Ansprüche 8-12, bei dem die Schritte (c)-(f) in einem einzigen Arbeitszyklus erfolgen.

14. Verfahren nach einem der Ansprüche 8-13, bei dem die genannten Abfallfluidbehälter (14) und die genannten Behälter (16) für neues Fluid abgedichtete Druckgefäße sind, die Druck und Vakuum standhalten können.

15. Verfahren nach einem der Ansprüche 8-14, bei dem der Schritt zum Ablassen jedes der verschiedenen Abfallfluidströme in getrennte, zweckgebundene und wiederverwendbare sowie abdichtende Behälter durch fluiddichten Anschluß einer Abfallfluidleitung (18) zwischen dem Fahrzeug oder der Maschine und dem getrennten, zweckgebundenen und wiederverwendbaren und abdichtbaren Behälter (14), und Anlegen eines Vakuums an den Behälter (14) erreicht wird, wodurch der Abfallfluidstrom veranlaßt wird, aus dem Fahrzeug heraus, durch die Abfallfluidleitung (18) und in den Behälter (14) in einer fluiddichten Weise zu fließen, wodurch Eintritt von jeglichem anderen außer Abfallfluid in den Behälter (14) verhindert wird.

## Revendications

1. Système de récupération de fluides résiduaires et de fourniture de fluides neufs pour récupérer des fluides résiduaires particuliers à partir de sources de fluides résiduaires telles que des véhicules et/ou machines, et fournir des fluides neufs particuliers auxdites sources de fluides résiduaires agissant maintenant en tant qu'utilisateurs de fluides neufs, telles que des véhicules et/ou machines, comprenant :
(a) une partie secondaire portable (10) du système (8), comprenant des récipients sous pression de fluide résiduaire secondaires étanches (14), chacun avec un moyen de conduit de fluide résiduaire (18), pour la collecte d'un fluide résiduaire particulier à partir de ladite source de fluide résiduaire, à travers ledit moyen de conduit de fluide résiduaire (18) et dans ledit récipient sous pression de fluide résiduaire secondaire étanche (14), et des récipients sous pression de fluide neuf secondaires étanches (16), chacun avec un moyen de conduit de fluide neuf (38), pour la fourniture d'un fluide neuf particulier audit utilisateur de fluide neuf (12) ; lesdits récipients de fluide neuf secondaires (16) contenant, en cours d'utilisation, un gaz inerte pour fournir une force motrice en vue d'acheminer le fluide neuf jusqu'au dit utilisateur de fluide neuf ; et
(b) une partie principale fixe (60) du système (8) pour préparer la partie secondaire portable (10) du système (8) en vue de sa réutilisation après le remplissage de ses récipients de fluide résiduaire (14) et le vidage de ses récipients de fluide neuf (16), ladite partie principale fixe (60) comprenant des récipients sous pression de fluide résiduaire principaux étanches (62), chacun connecté à une source de génération de vide (70), et ayant un conduit d'aspiration de fluide résiduaire principal (82) pour aspirer un fluide résiduaire et de l'air à partir d'un récipient de fluide résiduaire secondaire associé (14) quand les récipients de fluide résiduaire principaux (62) et secondaires (14) sont connectés, appliquant ainsi un vide auxdits récipients de fluide résiduaire secondaires (14) ; et des récipients de fluide neuf principaux étanches (66) contenant un fluide neuf, à chaque dit récipient de fluide neuf principal étanche (66) étant connectée une alimentation de gaz inerte (86) pour fournir une pression de gaz inerte sous pression audit récipient de fluide neuf (66), et un conduit de fourniture de fluide neuf principal (94) pour fournir du fluide neuf audit récipient de fluide neuf secondaire (16) ; dans lequel chaque récipient de fluide résiduaire (14) est accouplé à un récipient de fluide neuf spécifiquement codé et dédié correspondant (16), ledit accouplement aidant à garantir que le même type d'un courant de fluide résiduaire particulier, et d'un courant de fluide neuf sera respectivement collecté depuis, et fourni à, un véhicule ou une machine (12), en vue d'aider ainsi à garantir qu'un courant de fluide résiduaire particulier, et aucun autre, est collecté dans son récipient de fluide résiduaire approprié (14).

2. Système selon la revendication 1, pour changer l'huile de moteur d'un véhicule à moteur (12), comprenant en outre:
un moyen de logement portable (58) en vue de contenir lesdits récipients de fluide résiduaire (14) et de fluide neuf (16) secondaires ;
un moyen d'unité de vanne à positions multiples (132) en connexion fluide sélectionnable avec ledit moyen de conduit de fluide résiduaire secondaire (18) et ledit moyen de conduit de fluide neuf secondaire (38), ladite unité de vanne à positions multiples (132) exigeant que l'huile de moteur résiduaire soit d'abord aspirée dans ledit récipient de fluide résiduaire secondaire (14) avant que le fluide de moteur neuf puisse être fourni à partir dudit récipient de fluide neuf (16) ; et
un tube de fluide à jauge souple (136) qui est connecté par fluide audit moyen d'unité de vanne à positions multiples (132), ledit tube de fluide à jauge souple (136) étant dimensionné de manière à pouvoir atteindre le bas d'une cuvette à huile (130) d'un moteur de véhicule (12), dans lequel l'huile de moteur usée peut être retirée du moteur du véhicule (12), et remplacée par de l'huile moteur neuve par l'intermédiaire dudit tube de fluide à jauge souple (136).

3. Système selon la revendication 2, dans lequel l'unité de vanne de fluide à positions multiples (132) comprend deux vannes adjacentes (138, 142), une (138) pour commander le flux d'huile usée dans le récipient de fluide résiduaire secondaire (14) et une (142) pour commander le flux d'huile neuve hors du récipient de fluide neuf secondaire (16), à chacune d'elles étant fixé un plateau de disque circulaire (162, 164) reposant de manière générale dans un même plan, chaque dit plateau de disque circulaire (162, 164) ayant une partie enfoncée en forme de croissant (168) retirée, de telle sorte que la position des deux plateaux de disque circulaires (162, 164) ne permette pas l'ouverture simultanée des deux vannes adjacentes, et lesdits plateaux de disque circulaires (162, 164) exigeant que la vanne (138) servant à commander le flux d'huile de moteur usée soit ouverte, puis fermée, avant que la vanne (142) servant à commander le flux d'huile de moteur neuve ne puisse être ouverte, puis fermée.

4. Système selon l'une quelconque des revendications 1 à 3, comprenant en outre un tube de sortie de fluide de récipient de fluide neuf secondaire (44) s'étendant jusqu'à proximité du bas du récipient de fluide neuf secondaire, et une soupape d'arrêt à boulet flottant (200) qui permet au fluide neuf de sortir du et d'entrer dans le récipient de fluide neuf secondaire (16), mais empêche le gaz inerte d'en sortir, ladite soupape d'arrêt à boulet flottant (200) comprenant une chambre de fluide (202) avec une entrée de fluide (204) au niveau d'une partie supérieure, une sortie de fluide (206) au niveau d'une partie inférieure, un siège en forme d'anneau (208) au niveau d'une partie inférieure, au-dessus de ladite sortie de fluide (206), et un boulet flottant (210) contenu dans la chambre de fluide (202) qui s'assied de manière étanche au fluide et au gaz sur ledit siège en forme d'anneau (208) quand aucun fluide n'est présent dans la chambre de fluide (202), ce qui correspond à une condition où le récipient de fluide neuf secondaire (16) est vide.

5. Système selon la revendication 4, dans lequel ladite soupape d'arrêt à boulet flottant (200) comprend en outre un orifice de recharge de fluide neuf (212) en connexion fluide avec ladite sortie de fluide (206), ledit orifice de recharge de fluide neuf (212) pouvant être étanche quand ledit récipient de fluide neuf secondaire (16) n'est pas rechargé en fluide neuf.

6. Système selon l'une quelconque des revendications 1 à 3, comprenant en outre une soupape d'arrêt à boulet flottant (200) pour utiliser un effet de venturi en vue de créer un vide dans le récipient de fluide résiduaire principal (62), ladite soupape d'arrêt à boulet flottant (200) comprenant :
une chambre à vide (222) avec des ouvertures d'air au niveau de ses extrémités supérieure et inférieure ;
des sièges en forme d'anneau (226, 228) situés au niveau des extrémités supérieure et inférieure de la chambre à vide (222), entourant les ouvertures d'air ;
un boulet flottant (224) dimensionné pour s'asseoir de manière étanche au gaz et de manière étanche au fluide avec les sièges en forme d'anneau supérieur (226) et inférieur (228), et ainsi bloquer le flux de gaz et de fluide à travers eux ;
un tube d'admission d'air (236) en communication avec l'ouverture d'air au niveau de l'extrémité inférieure de la chambre à vide (222) et s'étendant légèrement dans le récipient de fluide résiduaire principal ;
un tube venturi (230) ; et
un tube d'échappement d'air (232) en communication avec l'ouverture d'air en haut de la chambre à vide (222) et avec ledit tube venturi (230), ledit tube venturi (230) étant de manière générale perpendiculaire au tube d'échappement d'air (234) ; dans lequel quand de l'air sera passé rapidement à travers ledit tube venturi (230), l'air sera aspiré hors dudit récipient de fluide résiduaire principal (62), et lorsque ladite pre-ssion de vide dans ledit récipient de fluide résiduaire principal (62) sera égale à la basse pression créée dans ladite chambre à vide (222), le boulet flottant (224) s'assiéra de manière étanche au gaz et au fluide sur le siège en forme d'anneau inférieur (226), et si le fluide résiduaire entre par accident dans la chambre à vide (222), le boulet flottant (210) flottera vers le haut et s'assiéra de manière étanche au fluide sur le siège supérieur (228) et empêchera ainsi le fluide résiduaire de fuir hors de la chambre à vide (222).

7. Système selon l'une quelconque des revendications 1 à 6, dans lequel la pression de gaz dans ledit récipient de fluide neuf secondaire (16) fournit la force motrice en vue de fournir du fluide neuf audit utilisateur de fluide.

8. Procédé de récupération et de réutilisation d'au moins une pluralité de courants de fluides résiduaires à base d'huile différents utilisés par les véhicules à des sites différents et de fourniture d'une pluralité de courants de fluides à base d'huile neufs ou retraités différents utilisés par des véhicules et machines, à des sites différents, comprenant les étapes de :
(a) fourniture de récipients de fluide résiduaire portables, non remplis, séparés et distincts, pouvant être étanches et réutilisés (14), chacun d'eux étant identifiable par rapport à d'autres récipients identifiables, chacun d'eux étant dédié pour ne contenir qu'un seul courant de fluide résiduaire à base d'huile particulier, et aucun autre, à des sites de véhicules et de machines afin d'empêcher ainsi un mélange de différents courants de lubrifiants résiduaires dans lesdits récipients de fluide résiduaire dédiés (14) ;
(b) décharge de chacun d'une pluralité desdits courants de fluides résiduaires à base- d'huile différents dans lesdits récipients de fluide résiduaire séparés et distincts (14) ;
(c) fourniture de ladite pluralité desdits courants de fluides résiduaires à base d'huile différents et maintenant séparés, à partir desdits récipients de fluide résiduaire séparés et distincts (14) à des récipients connectés à une source de génération de vide pour aspirer du fluide résiduaire et de l'air depuis lesdits récipients de fluide résiduaire séparés et distincts, et de là à des installations de retraitement en vue de produire une pluralité de courants de fluides à base d'huile séparés et distincts retraités pouvant être réutilisés, préparant ainsi lesdits récipients de fluide résiduaire séparés et distincts (14) à un remplissage, avec un courant de fluide à base d'huile particulier, aux sites différents de véhicules et machines, sans nettoyage ni reconditionnement intermédiaires desdits récipients de fluide résiduaire (14) ;
(d) fourniture d'une pluralité desdits courants de fluides à base d'huile neufs, ou retraités, chacun du même type que ladite pluralité desdits courants de fluides résiduaires à base d'huile différents en vue de leur utilisation par des véhicules et machines, dans des récipients de fluide neuf séparés et distincts, portables, pouvant être étanches (16) ayant, en cours d'utilisation, un gaz inerte à l'intérieur, aux différents sites desdits véhicules ;
(e) fourniture desdits courants de fluides à base d'huile neufs, ou retraités, auxdits véhicules et machines, la force motrice de ladite fourniture étant ledit gaz inerte ; et
(f) réapprovisionnement desdits récipients de fluide neuf séparés et distincts (16) avec des courants de fluides à base d'huile neufs ou retraités, sans nettoyage ni reconditionnement intermédiaires desdits récipients de fluide neuf (16) ; dans lequel chacun desdits récipients de fluide résiduaire (14) est accouplé à un récipient de fluide neuf spécifiquement codé et dédié correspondant (16), ledit accouplement aidant à garantir que le même type d'un courant de fluide résiduaire à base d'huile particulier, et d'un courant de fluide neuf à base d'huile sera respectivement collecté depuis, et fourni à, un véhicule ou une machine, en vue d'aider à garantir qu'un courant de fluide résiduaire à base d'huile particulier, et aucun autre, est collecté dans son récipient de fluide résiduaire approprié (14).

9. Procédé selon la revendication 8, dans lequel ladite pluralité desdits courants de fluides résiduaires à base d'huile différents sont fournis auxdites installations de retraitement dans lesdits récipients de fluide résiduaire séparés et distincts (14).

10. Procédé selon la revendication 8 ou la revendication 9, dans lequel ladite pluralité desdits courants de fluides résiduaires à base d'huile différents sont fournis auxdites installations de retraitement dans d'autres récipients de fluide résiduaire séparés et distincts (14), en vidant lesdits courants de fluides résiduaires à base d'huile dans lesdits autres récipients de fluide résiduaire séparés et distincts aux différents sites des véhicules et machines.

11. Procédé selon l'une quelconque des revendications 8 à 10, dans lequel ledit réapprovisionnement desdits récipients de fluide neuf séparés et distincts (16) se produit aux différents sites des véhicules et machines.

12. Procédé selon l'une quelconque des revendications 8 à 11, dans lequel ledit réapprovisionnement desdits récipients de fluide neuf séparés et distincts (16) se produit à des sites autres que les différents sites des véhicules et machines.

13. Procédé selon l'une quelconque des revendications 8 à 12, dans lequel les étapes (c) à (f) se produisent dans un cycle unique de fonctionnement.

14. Procédé selon l'une quelconque des revendications 8 à 13, dans lequel lesdits récipients de fluide résiduaire (14) et lesdits récipients de fluide neuf (16) sont des cuves sous pression étanches capables de résister à la pression et au vide.

15. Procédé selon l'une quelconque des revendications 8 à 14, dans lequel l'étape de décharge de chacun des courants de fluides résiduaires dans des récipients distincts, dédiés et pouvant être réutilisés et étanches est réalisée en connectant de manière étanche au fluide un conduit de fluide résiduaire (18) entre le véhicule ou les machines et le récipient distinct, dédié et pouvant être réutilisé et étanche (14), et en appliquant un vide au récipient (14), forçant ainsi le courant de fluide résiduaire à s'écouler hors du véhicule, à travers le conduit de fluide résiduaire (18), et dans le récipient (14) d'une manière étanche au fluide, empêchant ainsi à toute chose autre que le fluide résiduaire d'entrer dans le récipient (14).
